# EUROPEAN PATENT SPECIFICATION

(11) **EP 3 401 561 B1**
(45) Date of publication and mention of the grant of the patent: **10.03.2021**
(21) Application number: 17735946.0
(22) Date of filing: 04.01.2017
(51) Int. Cl.: F16C 17/10, F16C 33/20, F16C 17/04, F16C 33/24, F16C 27/02, F16C 27/06, B60G 15/06

(54) **SLIDE BEARING**
GLEITLAGER
PALIER LISSE

(30) Priority: 08.01.2016 JP 2016002955
(43) Date of publication of application: 14.11.2018
(73) Proprietor: Oiles Corporation, Tokyo 108-0075 (JP)
(72) Inventor: MORISHIGE, Kouichi, Fujisawa-shi Kanagawa 252-0811 (JP); IMAGAWA, Keisuke, Fujisawa-shi Kanagawa 252-0811 (JP)
(74) Representative: Puschmann Borchert Kaiser Klettner Patentanwälte Partnerschaft mbB
(86) International application number: PCT/JP2017/000007
(87) International publication number: WO 2017/119409

(56) References cited:
- JP-A- H0 754 839
- JP-A- H10 292 813
- JP-A- 2001 173 658
- JP-A- 2004 263 773
- JP-A- 2013 096 534
- JP-A- 2014 040 869
- JP-A- 2015 017 708
- US-A1- 2008 310 780

## Description

### [Technical Field]

The present invention relates to a sliding bearing made of synthetic resin and, particularly, to a sliding bearing to be built into an automobile as a sliding bearing of a strut type suspension (a MacPherson strut).

### [Background Art]

A conventional sliding bearing for a strut type suspension is provided with: an upper case made of synthetic resin; a lower case made of synthetic resin; and a center plate which is disposed between the upper case and the lower case and which is a sliding bearing piece (for example, refer to PTL 1 and PTL 2).

In the sliding bearing described in PTL 1, the center plate is provided with: a thrust portion including a thrust sliding surface which slides relative to an upper base of the upper case; and a radial portion including a radial sliding surface which slides relative to an inner circumferential portion of the upper case, and an axial cross-section of the center plate is configured in an approximate L-shape.

### [Citation List]

### [Patent Literature]

[PTL 1]
   Japanese Patent Application Publication No. 2013-96534
[PTL 2]
   US 2008/310780 A1

### [Summary of Invention]

### [Technical Problem]

In a center plate of a sliding bearing, a thrust sliding surface of a thrust portion is required to have excellent sliding properties and elasticity that enables the thrust sliding surface to readily deform and a radial sliding surface of a radial portion is required to have excellent sliding properties and rigidity that enables the radial sliding surface to support an acting load. However, since the center plate of the sliding bearing described in PTL 1 is formed from a single material, it is difficult to fulfill requirements with respect to both the thrust sliding surface of the thrust portion and the radial sliding surface of the radial portion.

In consideration thereof, an object of the present invention is to provide a sliding bearing having a center plate which is disposed between an upper case and a lower case and which includes a thrust sliding surface having excellent sliding properties and elastic force and a radial sliding surface having excellent sliding properties and rigidity.

### [Solution to Problem]

In order to solve the problem described above, a sliding bearing of the present invention has an annular shape and includes: an upper case; a lower case rotatably combined with the upper case and forming an annular space with the upper case; and a center plate disposed in the annular space. The upper case includes: an upper base which has an annular shape and which is capable of supporting a thrust load; and an inner circumferential portion which protrudes along an axial direction from an inner circumferential edge of the upper base and which has a cylindrical shape. The center plate is provided with: an annular thrust portion which is disposed between the upper base of the upper case and the lower case and which includes a thrust sliding surface slidable relative to the upper base; and a cylindrical radial portion which protrudes along the axial direction from an inner circumferential edge of the thrust portion, which is disposed between the inner circumferential portion of the upper case and the lower case, and which includes a radial sliding surface slidable relative to the inner circumferential portion of the upper case. A portion of the thrust portion that forms the thrust sliding surface is formed from a resin material having higher elasticity than a portion of the radial portion that forms the radial sliding surface.

The center plate is provided with: a plate body which includes: an annular thrust body portion which forms the thrust portion and which is disposed between the upper base of the upper case and the lower case; and the radial portion which protrudes along the axial direction from an inner circumferential edge of the thrust body portion, which is disposed between the inner circumferential portion of the upper case and the lower case, and which includes the radial sliding surface slidable relative to the inner circumferential portion of the upper case; and a thrust plate which forms the thrust portion, which is provided on the thrust body portion, and which includes the thrust sliding surface slidable relative to the upper base. The thrust plate which forms the thrust portion and which includes the thrust sliding surface is formed from a thermoplastic elastomer, and the thermoplastic elastomer has higher elasticity than a thermoplastic resin forming the radial sliding surface of the radial portion.

The plate body and the thrust plate including the thrust sliding surface may be integrated by fitting, insert molding, or multicolor molding.

A portion of the radial portion that forms the radial sliding surface is formed from a thermoplastic resin. A portion of the thrust portion that forms the thrust sliding surface may be formed from a thermoplastic elastomer having higher elasticity than the thermoplastic resin.

A thermoplastic resin which forms the radial sliding surface may be a polyamide resin, a polyacetal resin, or a polyethylene resin. A thermoplastic elastomer which forms the thrust sliding surface may be a styrene-based, olefin-based, polyamide-based, polyester-based, or urethane-based elastomer.

A concave portion to be filled with a lubricant may be formed on the thrust sliding surface of the thrust portion.

A sectional shape of the concave portion along the axial direction may be a corrugated shape.

A sliding sheet may be provided between the upper base of the upper case and the thrust sliding surface of the thrust portion. The sliding sheet may be formed from a fluororesin, a polyacetal resin, a polyethylene resin, a polyamide resin, or a polyphenylene sulfide resin.

A groove to be filled with a lubricant may be formed on the radial sliding surface of the radial portion.

### [Advantageous Effects of Invention]

According to the present invention, there can be provided a sliding bearing that has a center plate which is disposed between an upper case and a lower case and which includes a thrust sliding surface having excellent sliding properties and elastic force and a radial sliding surface having excellent sliding properties and rigidity.

### [Brief Description of Drawings]

[Fig. 1]

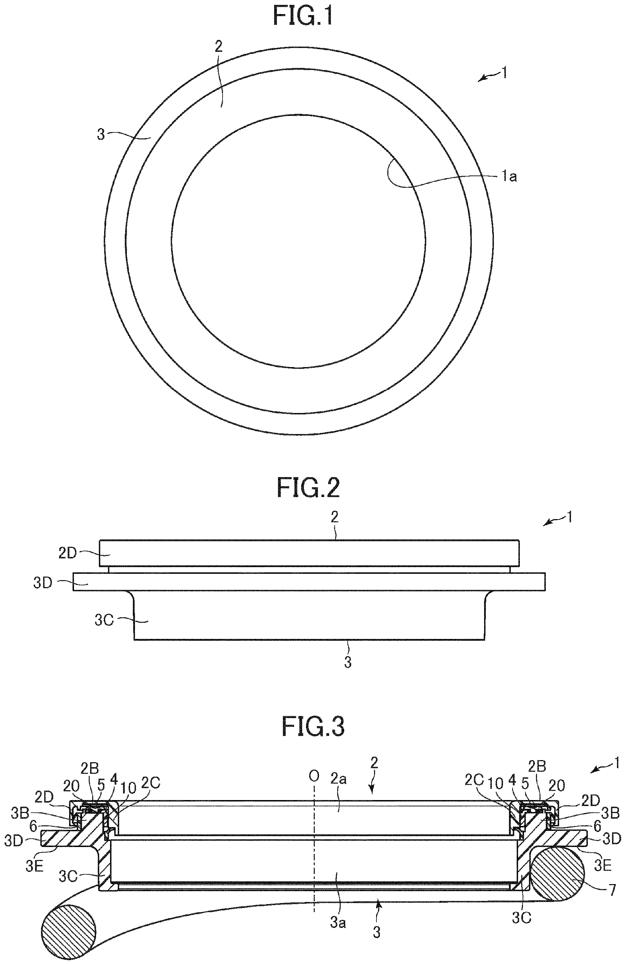

   Fig. 1 shows a plan view of a sliding bearing according to the present embodiment.
[Fig. 2]
   Fig. 2 shows a side view of a sliding bearing.
[Fig. 3]
   Fig. 3 shows a sectional view of a sliding bearing.
[Fig. 4]

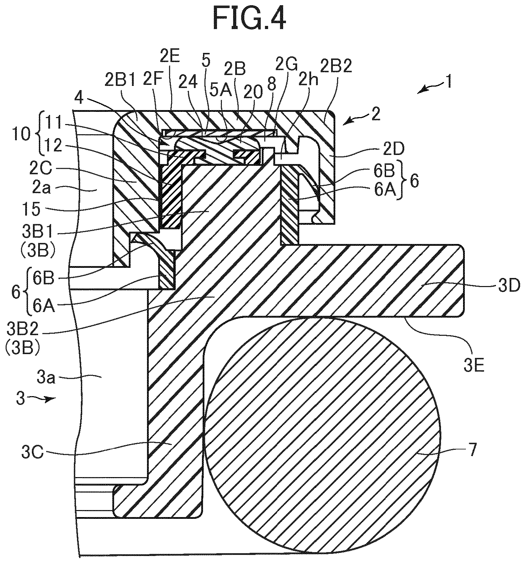

   Fig. 4 shows a partial enlarged sectional view of a sliding bearing.
[Fig. 5]

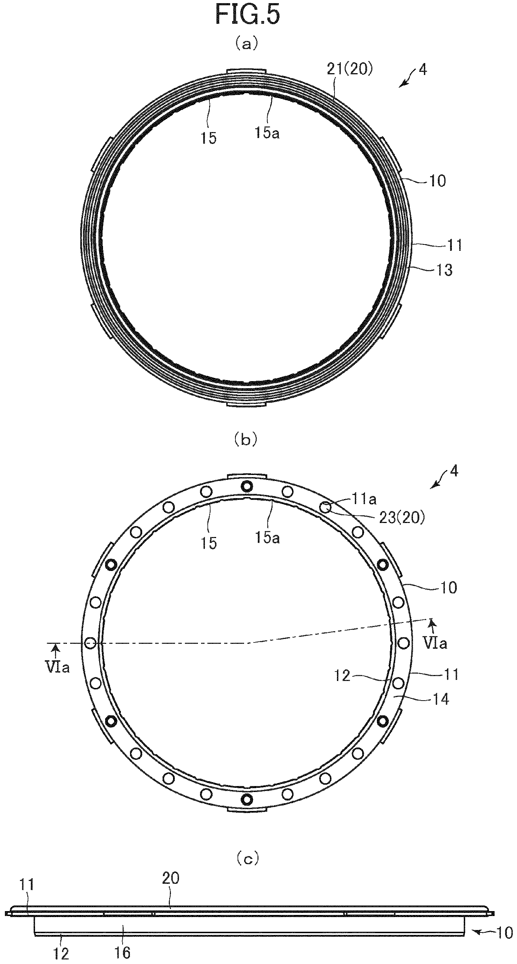

   Fig. 5(a) shows a plan view of a center plate, Fig. 5(b) shows a bottom view of a center plate, and Fig. 5(c) shows a side view of a center plate.
[Fig. 6]

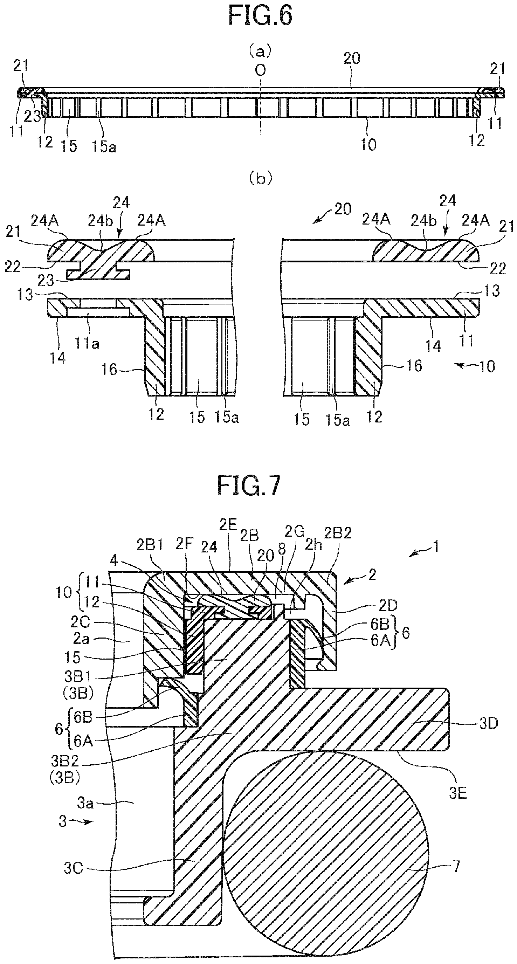

   Fig. 6(a) shows a sectional view along line Via-Via in Fig. 5(b) and Fig. 6(b) shows an exploded enlarged view of a vicinity of both left and right ends of the center plate shown in Fig. 6(a).
[Fig. 7]
   Fig. 7 shows a partial enlarged sectional view of a sliding bearing according to a modification.

### [Description of Embodiments]

A sliding bearing 1 according to an embodiment of the present invention will be described with reference to the drawings.

The sliding bearing 1 is a sliding bearing to be built into a strut type suspension in an automobile and which includes a housing hole 1a for housing a strut assembly, and which supports a load of a vehicle body applied to the strut type suspension while allowing rotation of the strut assembly.

### <Overall configuration of sliding bearing 1>

Fig. 1 shows a plan view of the sliding bearing 1 according to the present embodiment, Fig. 2 shows a side view of the sliding bearing 1, Fig. 3 shows a sectional view of the sliding bearing 1, and Fig. 4 shows a partial enlarged sectional view of the sliding bearing 1.

As shown in Fig. 1, the sliding bearing 1 has an annular shape and includes an upper case 2, a lower case 3, a center plate 4 (Figs. 3 and 4), a sliding sheet 5 (Figs. 3 and 4), and a dust seal 6 (Figs. 3 and 4).

### <Upper case 2>

The upper case 2 is formed from a thermoplastic resin with excellent sliding properties such as a polyacetal resin, and is mounted to an upper mount that is a mounting mechanism of the strut assembly of the strut type suspension to the vehicle body in a state where the strut assembly is inserted into the upper case 2. The upper case 2 is impregnated with lubricating oil when necessary.

The upper case 2 includes an insertion hole 2a and has an annular shape and, as shown in Fig. 4, the upper case 2 is provided with: an upper base 2B capable of supporting a thrust load; an inner circumferential portion 2C capable of supporting a radial load; and an outer circumferential portion 2D. The strut assembly (not shown) is inserted into the insertion hole 2a. The annular upper base 2B is provided with: a mounting surface 2E; and a sheet housing concave portion 2G which is positioned on a side opposite to the mounting surface 2E and which includes a load transmission surface 2F. The upper mount is mounted to the mounting surface 2E when building the sliding bearing 1 into the strut assembly. The upper base 2B includes the sliding sheet 5 and the sheet housing concave portion 2G houses the sliding sheet 5. The load transmission surface 2F transmits load of the vehicle body applied to the strut type suspension to the center plate 4 and the sliding sheet 5.

The inner circumferential portion 2C protrudes along an axial direction O from an inner circumferential edge 2B1 of the upper base 2B and forms a cylindrical shape. The outer circumferential portion 2D protrudes along the axial direction O from an outer circumferential edge 2B2 of the upper base 2B and forms a cylindrical shape. An annular concave portion 2h is formed by the upper base 2B, the inner circumferential portion 2C, and the outer circumferential portion 2D.

### <Lower case 3>

The lower case 3 is formed from a thermoplastic resin with excellent sliding properties such as a polyacetal resin, and is urged toward a side of the upper case 2 by a coil spring 7 of the strut type suspension in a state where the strut assembly of the strut type suspension is inserted into the lower case 3. The lower case 3 is rotatably combined with the upper case 2.

The lower case 3 includes an insertion hole 3a and has an annular shape, and is provided with: a lower base 3B; a case protrusion 3C; and a flange 3D. In the lower base 3B having a cylindrical shape, an upper side part 3B1 is positioned inside the annular concave portion 2h of the upper case 2 and a lower side part 3B2 is positioned outside the annular concave portion 2h. The upper case 2 and the upper side part 3B1 of the lower base 3B form an annular space 8 with an approximate L-shape in a sectional view which houses the center plate 4 and the sliding sheet 5.

The case protrusion 3C protrudes from a lower end of an inner circumference of the lower side part 3B2 of the lower base 3B toward a side opposite to the side of the upper case 2. The flange 3D protrudes more outward in a radial direction than the outer circumferential portion 2D of the upper case 2 from an outer circumferential edge of the lower side part 3B2 of the lower base 3B. In addition, an urged surface 3E which is abutted by the coil spring 7 and which receives an urging force thereof is formed in the lower side part 3B2 of the lower base 3B and the flange 3D on a side opposite to the side of the upper case 2.

### <Center plate 4>

The center plate 4 will be described with reference to Figs. 4 to 6. Figs. 5(a), 5(b), and 5(c) respectively show a plan view, a bottom view, and a side view of the center plate 4. Fig. 6(a) shows a sectional view along line Via-Via in Fig. 5(b), and Fig. 6(b) shows an exploded enlarged view of a vicinity of both left and right ends of the center plate 4 shown in Fig. 6(a).

The center plate 4 is provided with a plate body 10 and a thrust plate 20 and is disposed inside the annular space 8.

### <Plate body 10>

The plate body 10 is formed from a thermoplastic resin with excellent sliding properties such as a polyamide resin, a polyacetal resin, and a polyethylene resin.

The plate body 10 has an approximately L-shaped annular shape in a sectional view and is provided with: an annular thrust body portion 11; and a cylindrical radial portion 12 which protrudes along the axial direction O from an inner circumferential edge of the thrust body portion 11.

The thrust body portion 11 is disposed above the upper side part 3B1 of the lower base 3B. As shown in Figs. 5 and 6, a plurality of fitting holes 11a with an approximate convex sectional shape are formed at regular intervals in a circumferential direction in the thrust body portion 11 so as to penetrate an upper surface 13 and a lower surface 14 thereof (note that, in Fig. 5(b), a reference numeral is only assigned to one location for the sake of simplicity).

As shown in Fig. 4, the radial portionl2 is disposed between the inner circumferential portion 2C of the upper case 2 and the upper side part 3B1 of the lower base 3B. As shown in Figs. 5 and 6, the radial portion 12 includes an inner circumferential surface 15, and a plurality of grooves 15a are formed on the inner circumferential surface 15 (in Figs. 5 and 6, a reference numeral is only assigned to one location for the sake of simplicity). The inner circumferential surface 15 of the radial portion 12 functions as a radial sliding surface that is slidable relative to the inner circumferential portion 2C of the upper case 2. The plurality of grooves 15a formed on the inner circumferential surface 15 act as a sump portion of a lubricant such as grease. An outer circumferential surface 16 of the radial portion 12 abuts the upper side part 3B1 of the lower base 3B.

### <Thrust plate 20>

The thrust plate 20 is formed from a material which has excellent sliding properties and which has higher elasticity (lower rigidity) than the thermoplastic resin used in the plate body 10, examples of which include a thermoplastic elastomer such as a styrene-based, olefin-based, polyamide-based, polyester-based, or urethane-based elastomer and soft PBT (polybutylene terephthalate). When necessary, a lubricant such as PTFE (polytetrafluoroethylene), a lubricating oil, or silicone is added to the material forming the thrust plate 20. The thrust body portion 11 of the plate body 10 and the thrust plate 20 support a load of the vehicle body applied to the strut type suspension via the load transmission surface 2F of the upper base 2B of the upper case 2 and the sliding sheet 5. The thrust body portion 11 of the plate body 10 and the thrust plate 20 form a thrust portion.

As shown in Figs. 5 and 6, the thrust plate 20 includes: a plate base 21 with an annular shape; and a plurality of fitting portions 23 with an approximate convex sectional shape provided on the lower surface 22 of the plate base 21 so as to correspond to the plurality of fitting holes 11a of the thrust body portion 11. Due to the lower surface 22 of the plate base 21 abutting the upper surface 13 of the thrust body portion 11 and each fitting portion 23 fitting with the corresponding fitting hole 11a, the plate body 10 and the thrust plate 20 are integrally constructed.

An upper surface 24 of the plate base 21 supports a load applied to the load transmission surface 2F of the upper case 2 via the sliding sheet 5. The upper surface 24 includes two annular convex portions 24A and an annular concave portion 24b sandwiched between the two convex portions 24A, and a sectional shape along the axial direction O is a corrugated shape. In addition, the concave portion 24b on the upper surface 24 is filled with a lubricant. The upper surface 24 slidably abuts the sliding sheet 5 and functions as a thrust sliding surface. As described above, the thrust plate 20 which forms the thrust portion and which includes the upper surface 24 that is a thrust sliding surface is formed from a thermoplastic elastomer, and the thermoplastic elastomer has higher elasticity than the thermoplastic resin forming the inner circumferential surface 15 that is a radial sliding surface of the radial portion 12.

### <Sliding sheet 5>

The sliding sheet 5 is formed from a thermoplastic resin with excellent sliding properties of which examples include a fluororesin such as PTFE, a polyacetal resin, a polyethylene resin, a polyamide resin, and a polyphenylene sulfide resin. When necessary, a lubricant such as PTFE (excluding cases where the thermoplastic resin forming the sliding sheet 5 is PTFE resin), lubricating oil, silicone, and graphite and/or a reinforcing material such as aramid fiber, glass fiber, and carbon fiber are added to the thermoplastic resin which forms the sliding sheet 5. In addition, as shown in Fig. 4, the sliding sheet 5 is housed in the sheet housing concave portion 2G of the upper case 2 and is disposed between the upper surface 24 of the thrust plate 20 of the center plate 4 and the load transmission surface 2F of the upper case 2.

The sliding sheet 5 is configured such that a sectional shape thereof is a rectangular annular shape and a lower surface 5A thereof slides against the upper surface 24 of the thrust plate 20 of the center plate 4. Due to the lower surface 5A of the sliding sheet 5 sliding against the upper surface 24 of the thrust plate 20, rotation between the upper case 2 and the lower case 3 is enabled.

### <Dust seal 6>

The dust seal 6 that is a seal member is formed from an elastic body such as a urethane resin and is mounted to an outer circumference and an inner circumference of the lower base 3B of the lower case 3. The dust seal 6 is provided with: a seal base 6A mounted to an outer circumference and an inner circumference of the upper side part 3B1 of the lower base 3B; and a lip portion 6B which extends toward sides of the outer circumferential portion 2D and the inner circumferential portion 2C of the upper case 2 from an upper end of the seal base 6A. The lip portion 6B of the dust seal 6 abuts the inner circumferential portion 2C and the outer circumferential portion 2D of the upper case 2 and prevents foreign objects from penetrating into the annular space 8.

### < Function and Effect >

With the sliding bearing 1 according to the present embodiment, the thrust plate 20 which forms a thrust portion and which includes the upper surface (the thrust sliding surface) 24 is formed from a thermoplastic elastomer, and the thermoplastic elastomer has higher elasticity than the thermoplastic resin forming the inner circumferential surface (the radial sliding surface) 15 of the radial portion12. That is, a portion of the thrust portion that forms the upper surface (the thrust sliding surface) 24 is formed from a thermoplastic elastomer having higher elasticity than the thermoplastic resin forming the radial sliding surface 15 of the radial portion 12. In other words, the portion of the thrust portion that forms the thrust sliding surface 24 is formed from a resin material having higher elasticity than the portion of the radial portion 12 that forms the radial sliding surface 15.

As described above, the portion forming the upper surface (the thrust sliding surface) 24 is formed from a thermoplastic elastomer having higher elasticity than the thermoplastic resin forming the radial sliding surface 15 of the radial portion 12. Accordingly, the upper surface (the thrust sliding surface) 24 of the thrust plate 20 is capable of realizing excellent sliding properties. Even when an unbalanced load is applied to the center plate 4 via the upper case 2, the thrust plate 20 elastically deforms to enable the unbalanced load to be absorbed.

In addition, since the radial sliding surface 15 of the radial portion 12 is formed from a thermoplastic resin, excellent sliding properties and rigidity enabling a load acting in a radial direction to be supported are realized.

As described above, with the sliding bearing 1 according to the present embodiment, the sliding bearing 1 having the center plate 4 which includes a thrust sliding surface (the upper surface 24) having excellent sliding properties and elastic force and a radial sliding surface (the inner circumferential surface 15) having excellent sliding properties and rigidity can be provided.

In addition, since the thrust plate 20 including the plate body 10 and the upper surface (the thrust sliding surface) 24 is integrated by fitting, the thrust plate 20 can be readily fixed to the upper case 2 and the lower case 3 and an assembly time of the sliding bearing 1 can be reduced.

Furthermore, the thermoplastic resin which forms the inner circumferential surface (the radial sliding surface) 15 is a polyamide resin, a polyacetal resin, or a polyethylene resin, and the thermoplastic elastomer which forms the upper surface (the thrust sliding surface) 24 is a styrene-based, olefin-based, polyamide-based, polyester-based, or urethane-based elastomer.

According to this configuration, the sliding bearing 1 having the center plate 4 which includes an upper surface (a thrust sliding surface) 24 having excellent sliding properties and elastic force and an inner circumferential surface (a radial sliding surface) 15 having excellent sliding properties and rigidity can be provided.

In addition, since the concave portion 24b to be filled with a lubricant is formed on the upper surface 24 of the thrust plate 20, sliding properties of the upper surface 24 of the thrust plate 20 can be further improved.

Furthermore, a sectional shape along the axial direction of the concave portion 24b of the upper surface 24 of the thrust plate 20 is a corrugated shape. According to this configuration, the thrust plate 20 can be significantly elastically deformed to further improve a sealing performance of the lubricant which fills the concave portion 24b of the upper surface 24 of the center plate 4, thereby enabling the sliding sheet 5 and the upper surface 24 of the thrust plate 20 to be lubricated by the lubricant over a longer period of time.

In addition, the sliding sheet 5 formed from a fluororesin, a polyacetal resin, a polyethylene resin, a polyamide resin, or a polyphenylene sulfide resin is provided between the upper base 2B of the upper case 2 and the upper surface (the thrust sliding surface) 24 of the thrust plate 20. Accordingly, the sliding properties of the upper surface (the thrust sliding surface) 24 of the thrust plate 20 with respect to the upper case 2 can be further improved.

Since grooves to be filled with a lubricant is formed on the inner circumferential surface 15 of the radial portion 12, sliding properties of the inner circumferential surface 15 of the radial portion 12 can be further improved.

It is to be understood that the present invention is not limited to the embodiment described above and that various modifications may be made within the scope of the claims.

For example, while the plate body 10 of the center plate 4 and the thrust plate 20 are integrated by fitting, the plate body 10 of the center plate 4 and the thrust plate 20 may instead be integrated by insert molding or multicolor molding.

In addition, while the upper base 2B of the upper case 2 includes the sliding sheet 5 in the embodiment described above, a configuration may be adopted in which the upper base 2B of the upper case 2 does not include the sliding sheet 5 and the upper surface 24 of the thrust plate 20 directly slides against the upper base 2B of the upper case 2 as shown in Fig. 7. Even in this case, the sliding bearing 1 having the center plate 4 which includes a thrust sliding surface (the upper surface 24) having excellent sliding properties and elastic force and a radial sliding surface (the inner circumferential surface 15) having excellent sliding properties and rigidity can be provided.

Furthermore, a configuration may be adopted in which, in the center plate 4, an entirety of the thrust portion is formed from a thermoplastic elastomer having higher elasticity (lower rigidity) than a thermoplastic resin forming the radial portion, an entirety of the radial portion is formed from a thermoplastic resin, and the thrust portion and the radial portion are integrated with each other.

### [Reference Signs List]

- 1: Sliding bearing
- 2: Upper case
- 2B: Upper base
- 2B1: Inner circumferential edge
- 2C: Inner circumferential portion
- 3: Lower case
- 4: Center plate
- 5: Dust seal
- 10: Plate body
- 11: Thrust body portion
- 12: Radial portion
- 15: Inner circumferential surface
- 20: Thrust plate
- 24: Upper surface
- 24b: Concave portion

## Claims

1. A sliding bearing (1) having an annular shape and comprising: an upper case (2); a lower case (3) rotatably combined with the upper case (2) and forming an annular space (8) with the upper case (2); and a center plate (4) disposed in the annular space (8), wherein
the upper case (2) includes: an upper base (2B) which has an annular shape and which is capable of supporting a thrust load; and an inner circumferential portion (2C) which protrudes along an axial direction (O) from an inner circumferential edge (2B1) of the upper base (2B) and which has a cylindrical shape,
the center plate (4) is provided with: an annular thrust portion which is disposed between the upper base (2B) of the upper case (2) and the lower case (3) and which includes a thrust sliding surface (24) slidable relative to the upper base (2B); and a cylindrical radial portion (12) which protrudes along the axial direction (O) from an inner circumferential edge of the thrust portion, which is disposed between the inner circumferential portion (2C) of the upper case (2) and the lower case (3), and which includes a radial sliding surface (15) slidable relative to the inner circumferential portion (2C) of the upper case (2),
and
a portion of the thrust portion that forms the thrust sliding surface (24) is formed from a resin material having higher elasticity than a portion of the radial portion (12) that forms the radial sliding surface (15);
**characterized in that**
the center plate (4) is provided with:
a plate body (10) which includes: an annular thrust body portion (11) which forms the thrust portion and which is disposed between the upper base (2B) of the upper case (2) and the lower case (3); and the radial portion (12) which protrudes along the axial direction (O) from an inner circumferential edge of the thrust body portion, which is disposed between the inner circumferential portion (2C) of the upper case (2) and the lower case (3), and which includes the radial sliding surface (15) slidable relative to the inner circumferential portion (2C) of the upper case (2); and
a thrust plate (20) which forms the thrust portion, which is provided on the thrust body portion (11), and which includes the thrust sliding surface (24) slidable relative to the upper base, and the thrust plate (20) which forms the thrust portion and which includes the thrust sliding surface (24) is formed from a thermoplastic elastomer, and the thermoplastic elastomer has higher elasticity than a thermoplastic resin forming the radial sliding surface (15) of the radial portion (12).

2. The sliding bearing (1) according to claim 1, **characterized in that** the plate body (10) and the thrust plate (20) including the thrust sliding surface (24) are integrated by fitting, insert molding, or multicolor molding.

3. The sliding bearing (1) according to claim 1, **characterized in that**
a portion of the radial portion (12) that forms the radial sliding surface (15) is formed from a thermoplastic resin, and
a portion of the thrust portion that forms the thrust sliding surface (24) is formed from a thermoplastic elastomer having higher elasticity than the thermoplastic resin.

4. The sliding bearing (1) according to any one of claims 1 to 3, **characterized in that** a thermoplastic resin which forms the radial sliding surface (15) is a polyamide resin, a polyacetal resin, or a polyethylene resin, and
a thermoplastic elastomer which forms the thrust sliding surface (24) is a styrene-based, olefin-based, polyamide-based, polyester-based, or urethane-based elastomer.

5. The sliding bearing (1) according to any one of claims 1 to 4, **characterized in that** a concave portion (24A) to be filled with a lubricant is formed on the thrust sliding surface (24) of the thrust portion.

6. The sliding bearing according to claim 5, **characterized in that** a sectional shape of the concave portion (24A) along the axial direction is a corrugated shape.

7. The sliding bearing (1) according to any one of claims 1 to 6, **characterized in that** a sliding sheet (5) is provided between the upper base (2B) of the upper case (2) and the thrust sliding surface (24) of the thrust portion, and
the sliding sheet (5) is formed from a fluororesin, a polyacetal resin, a polyethylene resin, a polyamide resin, or a polyphenylene sulfide resin.

8. The sliding bearing (1) according to any one of claims 1 to 7, **characterized in that** a groove (15A) to be filled with a lubricant is formed on the radial sliding surface (15) of the radial portion (12).

## Patentansprüche

1. Gleitlager (1), das ringförmig ausgebildet ist und folgendes umfasst: ein oberes Gehäuse (2);
ein unteres Gehäuse (3), das drehbar mit dem oberen Gehäuse (2) kombiniert ist und mit dem oberen Gehäuse (2) einen ringförmigen Raum (8) bildet; und eine in dem ringförmigen Raum (8) angeordnete Mittelplatte (4), wobei
das obere Gehäuse (2) folgendes aufweist: einen oberen Boden (2B), der ringförmig ausgebildet ist und in der Lage ist, eine Schublast aufzunehmen; und einen inneren Umfangsabschnitt (2C), der in axialer Richtung (0) von einem inneren Umfangsrand (2B1) des oberen Bodens (2B) vorsteht und zylindrische Form hat,
die Mittelplatte (4) mit folgendem versehen ist: einem ringförmigen Schubabschnitt, der zwischen dem oberen Boden (2B) des oberen Gehäuses (2) und dem unteren Gehäuse (3) angeordnet ist und eine bezüglich des oberen Bodens (2B) verschiebbare Schubgleitfläche (24) aufweist; und einen zylindrischen radialen Abschnitt (12), der in axialer Richtung (0) von einem inneren Umfangsrand des Schubabschnitts vorsteht, der zwischen dem inneren Umfangsabschnitt (2C) des oberen Gehäuses (2) und dem unteren Gehäuse (3) angeordnet ist, und der eine radiale Gleitfläche (15) aufweist, die relativ zu dem inneren Umfangsabschnitt (2C) des oberen Gehäuses (2) verschiebbar ist,
und
ein Teil des Schubabschnitts, der die Schubgleitfläche (24) bildet, aus einem Harzmaterial gebildet ist, das höhere Elastizität hat als ein Teil des radialen Abschnitts (12), der die radiale Gleitfläche (15) bildet;
**dadurch gekennzeichnet, dass**
die Mittelplatte (4) mit folgendem versehen ist:
einem Plattenkörper (10), der folgendes aufweist: einen ringförmigen Schubkörperabschnitt (11), der den Schubabschnitt bildet und der zwischen dem oberen Boden (2B) des oberen Gehäuses (2) und dem unteren Gehäuse (3) angeordnet ist; und den radialen Abschnitt (12), der in axialer Richtung (0) von einem inneren Umfangsrand des Schubkörperabschnitts vorsteht, der zwischen dem inneren Umfangsabschnitt (2C) des oberen Gehäuses (2) und dem unteren Gehäuse (3) angeordnet ist und der die radiale Gleitfläche (15) einschließt, die bezüglich des inneren Umfangsabschnitts (2C) des oberen Gehäuses (2) verschiebbar ist; und
eine den Schubabschnitt bildende Schubplatte (20), die an dem Schubkörperabschnitt (11) vorgesehen ist und die bezüglich des oberen Bodens verschiebbare Schubgleitfläche (24) aufweist, und wobei die den Schubabschnitt bildende Schubplatte (20), die die Schubgleitfläche (24) aufweist, aus einem thermoplastischen Elastomer gebildet ist, und das thermoplastische Elastomer eine höhere Elastizität hat als ein thermoplastisches Harz, das die radiale Gleitfläche (15) des radialen Abschnitts (12) bildet.

2. Gleitlager (1) nach Anspruch 1, **dadurch gekennzeichnet, dass** der Plattenkörper (10) und die Schubplatte (20) einschließlich der Schubgleitfläche (24) durch Einpassen, Umspritzen oder Mehrfarbenspritzgießen integriert werden.

3. Gleitlager (1) nach Anspruch 1, **dadurch gekennzeichnet, dass**
ein Teil des radialen Abschnitts (12), der die radiale Gleitfläche (15) bildet, aus einem thermoplastischen Harz gebildet ist, und
ein Teil des Schubabschnitts, der die Schubgleitfläche (24) bildet, aus einem thermoplastischen Elastomer gebildet ist, welches höhere Elastizität als das thermoplastische Harz aufweist.

4. Gleitlager (1) nach einem der Ansprüche 1 bis 3, **dadurch gekennzeichnet, dass** es sich bei einem thermoplastischen Harz, das die radiale Gleitfläche (15) bildet, um ein Polyamidharz, ein Polyacetalharz oder ein Polyethylenharz handelt, und
dass es sich bei einem thermoplastischen Elastomer, das die Schubgleitfläche (24) bildet, um ein Elastomer auf Styrol-, Olefin-, Polyamid-, Polyester- oder Urethanbasis handelt.

5. Gleitlager (1) nach einem der Ansprüche 1 bis 4, **dadurch gekennzeichnet, dass** ein mit einem Schmiermittel zu füllender konkaver Abschnitt (24A) auf der Schubgleitfläche (24) des Schubabschnitts ausgebildet ist.

6. Gleitlager nach Anspruch 5, **dadurch gekennzeichnet, dass** eine Querschnittsform des konkaven Abschnitts (24A) in axialer Richtung eine gewellte Form ist.

7. Gleitlager (1) nach einem der Ansprüche 1 bis 6, **dadurch gekennzeichnet, dass** eine Gleitfolie (5) zwischen dem oberen Boden (2B) des oberen Gehäuses (2) und der Schubgleitfläche (24) des Schubabschnitts vorgesehen ist, und
die Gleitfolie (5) aus einem Fluorharz, einem Polyacetalharz, einem Polyethylenharz, einem Polyamidharz oder einem Polyphenylensulfidharz gebildet ist.

8. Gleitlager (1) nach einem der Ansprüche 1 bis 7, **dadurch gekennzeichnet, dass** auf der radialen Gleitfläche (15) des radialen Abschnitts (12) eine mit einem Schmiermittel zu füllende Nut (15A) ausgebildet ist.

## Revendications

1. Palier lisse (1) ayant une forme annulaire et comprenant : un boîtier supérieur (2) ; un boîtier inférieur (3) combiné, en rotation, avec le boîtier supérieur (2) et formant un espace annulaire (8) avec le boîtier supérieur (2) ; et une plaque centrale (4) disposée dans l'espace annulaire (8), dans lequel :
le boîtier supérieur (2) comprend : une base supérieure (2B) qui a une forme annulaire et qui peut supporter une charge de poussée ; et une partie circonférentielle interne (2C) qui fait saillie le long d'une direction axiale (0) à partir d'un bord circonférentiel interne (2B1) de la base supérieure (2B) et qui a une forme cylindrique,
la plaque centrale (4) est prévue avec : une partie de poussée annulaire qui est disposée entre la base supérieure (2B) du boîtier supérieur (2) et le boîtier inférieur (3) et qui comprend une surface coulissante de poussée (24) pouvant coulisser par rapport à la base supérieure (2B) ; et une partie radiale cylindrique (12) qui fait saillie le long de la direction axiale (0) à partir d'un bord circonférentiel interne de la partie de poussée, qui est disposée entre la partie circonférentielle interne (2C) du boîtier supérieur (2) et le boîtier inférieur (3) et qui comprend une surface coulissante radiale (15) pouvant coulisser par rapport à la partie circonférentielle interne (2C) du boîtier supérieur (2), et
une partie de la partie de poussée qui forme la surface coulissante de poussée (24) est formée à partir d'un matériau en résine ayant une élasticité supérieure à une partie de la partie radiale (12) qui forme la surface coulissante radiale (15) ;
**caractérisé en ce que** :
la plaque centrale (4) est prévue avec :
un corps de plaque (10) qui comprend : une partie de corps de poussée annulaire (11) qui forme la partie de poussée et qui est disposée entre la base supérieure (2B) du boîtier supérieur (2) et le boîtier inférieur (3) ; et la partie radiale (12) qui fait saillie le long de la direction axiale (0) à partir d'un bord circonférentiel interne de la partie de corps de poussée, qui est disposée entre la partie circonférentielle interne (2C) du boîtier supérieur (2) et le boîtier inférieur (3), et qui comprend une surface coulissante radiale (15) pouvant coulisser par rapport à la partie circonférentielle interne (2C) du boîtier supérieur (2) ; et
une plaque de poussée (20) qui forme la partie de poussée, qui est prévue sur la partie de corps de poussée (11) et qui comprend la surface coulissante de poussée (24) pouvant coulisser par rapport à la base supérieure, et la plaque de poussée (20) qui forme la partie de poussée et qui comprend la surface coulissante de poussée (24) est formée à partir d'un élastomère thermoplastique, et l'élastomère thermoplastique a une élasticité supérieure à une résine thermoplastique formant la surface coulissante radiale (15) de la partie radiale (12).

2. Palier lisse (1) selon la revendication 1, **caractérisé en ce que** le corps de plaque (10) et la plaque de poussée (20) comprenant la surface coulissante de poussée (24) sont intégrés par ajustement, moulage par insertion ou moulage multicolore.

3. Palier lisse (1) selon la revendication 1, **caractérisé en ce que** :
une partie de la partie radiale (12) qui forme la surface coulissante radiale (15) est formée à partir d'une résine thermoplastique, et
une partie de la partie de poussée qui forme la surface coulissante de poussée (24) est formée à partir d'un élastomère thermoplastique ayant une élasticité supérieure à la résine thermoplastique.

4. Palier lisse (1) selon l'une quelconque des revendications 1 à 3, **caractérisé en ce que** :
une résine thermoplastique qui forme la surface coulissante radiale (15) est une résine polyamide, une résine de polyacétal ou une résine de polyéthylène, et
un élastomère thermoplastique qui forme la surface coulissante de poussée (24) est un élastomère à base de styrène, à base d'oléfine, à base de polyamide, à base de polyester ou à base d'uréthane.

5. Palier lisse (1) selon l'une quelconque des revendications 1 à 4, **caractérisé en ce que** :
une partie concave (24A) destinée à être remplie avec un lubrifiant, est formée sur la surface coulissante de poussée (24) de la partie de poussée.

6. Palier lisse selon la revendication 5, **caractérisé en ce qu'**une forme transversale de la partie concave (24A) le long de la direction axiale, est une forme ondulée.

7. Palier lisse (1) selon l'une quelconque des revendications 1 à 6, **caractérisé en ce que** :
une feuille coulissante (5) est prévue entre la base supérieure (2B) du boîtier supérieur (2) et la surface coulissante de poussée (24) de la partie de poussée, et
la feuille coulissante (5) est formée à partir d'une résine fluorée, d'une résine de polyacétal, d'une résine de polyéthylène, d'une résine de polyamide ou d'une résine de sulfure de polyphénylène.

8. Palier lisse (1) selon l'une quelconque des revendications 1 à 7, **caractérisé en ce que** :
une rainure (15A) destinée à être remplie avec un lubrifiant, est formée sur la surface coulissante radiale (15) de la partie radiale (12).
